# FASCICULE DE BREVET EUROPEEN

(11) **EP 0 637 002 B1**
(45) Date de publication et mention de la délivrance du brevet: **29.04.1998**
(21) Numéro de dépôt: 94401723.5
(22) Date de dépôt: 27.07.1994
(51) Int. Cl.: G07B 15/00, G06F 12/02

(54) **Procédé pour structurer des objets de télé transactions dans un équipement embarqué**
Strukturierungsverfahren für Teletransaktionsobjekte einer Bordanlage
Method for structuring objects of remote transactions in an on-board equipment

(30) Priorité: 29.07.1993 FR 9309344
(43) Date de publication de la demande: 01.02.1995
(73) Titulaire: ALCATEL ALSTHOM COMPAGNIE GENERALE D'ELECTRICITE, 75008 Paris (FR)
(72) Inventeur: Bueno, Serge, F-91080 Courcouronnes (FR)
(74) Mandataire: Gosse, Michel

(56) Documents cités:
- EP-A- 0 208 429
- EP-A- 0 425 961
- VEHICLE NAVIGATION & INFORMATION SYSTEMS CONFERENCE PROCEEDINGS, P-253, PART 2, 1 Octobre 1991, SOCIETY OF AUTOMOTIVE ENGINEERS, WARRENDALE US pages 977 - 987 M. R. KOMANECKY 'IVHS applications of smart cards'

## Description

L'invention porte sur un procédé pour structurer des objets de télé transactions dans un espace mémoire d'un équipement embarqué comportant un boîtier électronique muni d'une première mémoire réservée pour l'enregistrement de tels objets, un lecteur de carte à puce destiné à enregistrer de tels objets dans une seconde mémoire prévue sur la carte à puce, et des moyens d'émission réception vers un poste fixe.

Un tel procédé est destiné en premier lieu aux équipements embarqués (du type porte-monnaie électronique) commandés par télé transactions comme ceux que l'on utilise maintenant dans les systèmes de télé péage sur autoroute et qui permettent d'exécuter une transaction entre un équipement à bord d'un véhicule et une station de contrôle devant laquelle passe ce véhicule. Le procédé selon l'invention n'est pas limité à une telle application et il peut s'appliquer tout aussi bien aux systèmes de contrôle d'accès de personnes, systèmes urbains de télé billétique, etc..., fonctionnant de façon analogue aux systèmes de télé péage.

Les objets de télé transactions manipulés par de tels équipements sont des données d'information qui comportent les attributs habituels tels que type, longueur, droits d'accès, droits de modification, contenu crypté ou en clair, etc...

Jusqu'à présent, l'organisation de tels objets en mémoire dans l'équipement embarqué (mémoire du boîtier et mémoire de la carte à puce) est liée intrinsèquement au programme qui les manipule dans l'équipement. De ce fait, ce programme est dédié au format et à la signification des objets. Il existe donc une véritable dépendance sémantique entre le programme et l'organisation des objets en mémoire. Cette solution, bien qu'économique quant au coût de développement d'un tel programme, présente l'inconvénient suivant.

Au cours du temps, les équipements embarqués doivent évoluer pour satisfaire de nouveaux besoins des utilisateurs. Cette évolution se traduit généralement par la réorganisation des objets en mémoire et même la modification des attributs de tels objets. Il en résulte que les équipements d'un système déjà en service doivent être échangés pour la mise à jour du programme ce qui entraîne un surcoût important pour l'opérateur d'un tel système et une gène considérable pour les utilisateurs.

Pour solutionner ce problème, on peut prévoir de charger dans chaque équipement embarqué d'un système, un programme indépendant de la signification des objets qu'il manipule et qui réagit à des télé directives émises par une station fixe, ces télé directives se présentant sous la forme d'un jeu de commandes élémentaires visant à:
- transporter un ou des objets entre la station et un équipement embarqué;
- accéder globalement au contenu d'un objet;
- effectuer des opérations arithmétiques simples sur le contenu d'un objet, etc....

Ces commandes sont telles qu'il n'est pas nécessaire que le programme de l'équipement embarqué soit conçu en fonction de la signification des objets. L'interprétation de la signification des données est laissée à l'initiative du programme envoyant les télé directives depuis la station fixe.

Ces objets sont localisés physiquement au niveau de l'équipement, soit dans la mémoire du boîtier électronique, soit dans la mémoire de la carte à puce. Mais la seule différenciation de ces deux espaces mémoire physique est insuffisante pour tenir compte des besoins de duplication d'objets en mémoire, de rapidité de lecture des objets en mémoire lors d'une transaction à effectuer, de détection de fraude par substitution de carte à puce.

L'invention propose un procédé de structuration de tels objets en mémoire permettant de répondre à ces différents besoins de sécurité, portabilité, performance, d'associativité.

A cet effet, l'invention a pour objet un procédé pour structurer des objets de télé transactions dans un espace mémoire d'un équipement embarqué comportant un boîtier électronique muni d'une première mémoire réservée pour l'enregistrement de tels objets, un lecteur de carte à puce destiné à enregistrer de tels objets dans une seconde mémoire prévue sur la carte à puce, et des moyens d'émission réception vers un poste fixe, caractérisé en ce qu'on prévoit de partitionner l'espace mémoire physique défini par la première et la seconde mémoire en plusieurs espaces mémoire logique, chaque objet de télé transactions à enregistrer dans l'espace mémoire physique étant identifié par une adresse logique comportant un premier champ indicatif de l'espace mémoire logique de localisation d'un tel objet et un second champ indicatif d'un numéro logique d'objet.

Selon une autre caractéristique de l'invention, cet espace mémoire physique est partionné en quatre espaces mémoire logique. Un même objet peut être localisé simultanément dans plusieurs de ces espaces mémoire logique.

L'invention est maintenant décrite plus en détail en référence aux dessins.

La figure 1 représente de façon schématique les principaux éléments d'un système de télé péage.

La figure 2 représente de façon schématique, les éléments d'un équipement embarqué.

La figure 3 illustre l'organisation des objets dans un espace mémoire physique partionné en quatre espaces mémoire logique.

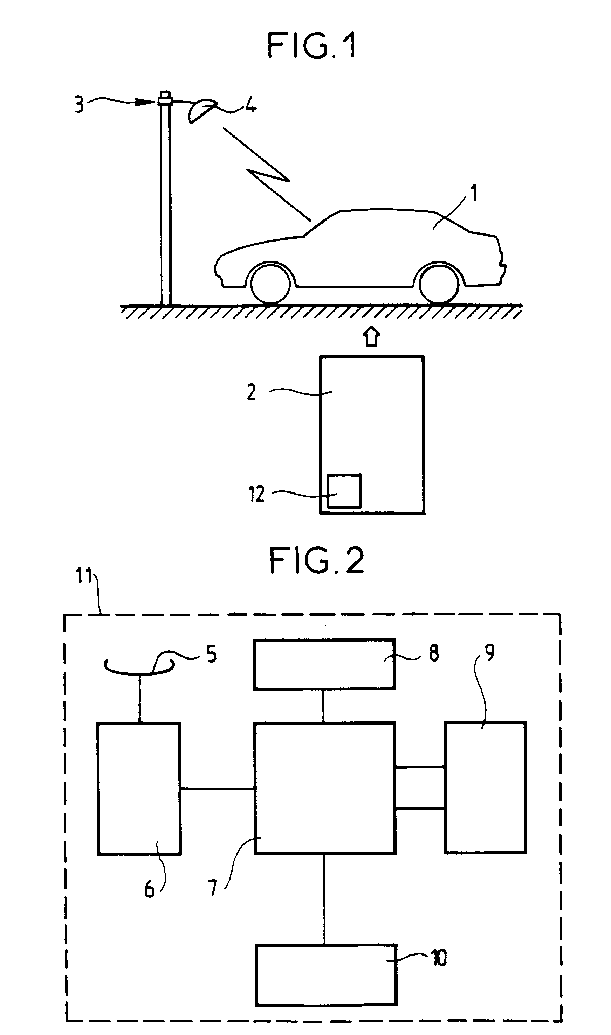

En se reportant à la figure 1, un système de télé péage classique en soi comporte un émetteur/récepteur 4 monté sur un support 3 placé à l'extrémité d'une section d'autoroute de manière à surplomber un véhicule 1 passant à proximité du support. Cet émetteur/récepteur est relié à une station fixe pour recevoir des directives à transmettre à un équipement embarqué dans le véhicule et éventuellement restituer à la station des informations qu'il reçoit de l'équipement dans le cadre d'une télé transaction.

L'équipement embarqué est du type à carte à puce 2 à microcalculateur, la carte à puce montrée sur la figure 1 comportant une mémoire physique 12 classique en soi.

En se reportant à la figure 2, un équipement embarqué comprend un boîtier électronique portable muni d'un émetteur/récepteur 6 relié à une antenne 5, un lecteur de carte à puce 9, une mémoire physique 8, éventuellement un dispositif interface homme-machine 10 tel qu'un clavier, et une unité de contrôle et de traitement de données 7 reliée à ces différents éléments 6,8,9,10.

Par la suite, on considère que la mémoire 12 de la carte à puce et la mémoire 8 du boîtier électronique définissent l'espace mémoire physique réservé à l'enregistrement des informations échangées entre la station fixe et l'équipement embarqué que l'on désigne par objets de télé transactions.

Les objets de télé transactions sont enregistrés dans l'espace mémoire physique par exemple sous forme de paquets de bits, les paquets pouvant avoir des tailles différentes. Chaque paquet est localisé dans cet espace mémoire physique par une adresse physique préalablement fixée.

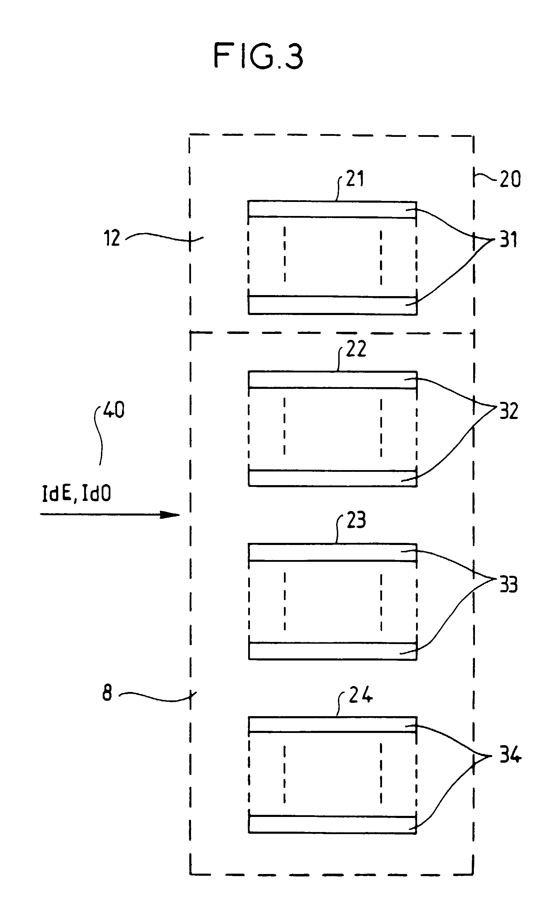

En se reportant maintenant à la figure 3, l'espace mémoire physique 20 est partitionné en espaces mémoire logique 21,22,23,24, les espaces logiques correspondant à des parties distinctes de l'espace physique.

Un objet 31,32,33,34 est localisé dans un espace logique par une adresse logique 40 comportant un identificateur d'espace logique IdE et un identificateur d'objet IdO. L'identificateur d'objet peut être un numéro attribué à l'objet.

Le programme commandant l'unité de contrôle 7 exploite une table de correspondance à deux entrées et une sortie, les deux entrées correspondant aux deux champs d'une adresse logique 40 d'objet et la sortie correspondant à l'adresse physique de l'objet dans l'espace mémoire physique 20. Cette table de correspondance peut être chargée dans le boîtier électronique pour sa configuration à partir d'une carte à puce dans laquelle est enregistrée une telle table.

Un exemple de structuration des objets en mémoire et d'utilisation des espaces logiques est maintenant décrit.

Le premier espace logique 21 correspond à l'espace physique 12 de la carte à puce. Il sert à mémoriser des objets dans la carte à puce et apporte les avantages connus de sécurité et de portabilité. la sécurité est obtenue par la nature même de la carte à puce qui permet d'assurer l'accès protégé à des objets localisés dans la carte à puce. La portabilité est inhérente à la taille réduite de la carte à puce par opposition à celle du boîtier 11 qui en plus est fixé sur le véhicule.

Pour réduire les temps de transaction entre la station et un équipement embarqué dans un véhicule se déplaçant à grande vitesse dans la zone de communication station-équipement, il est prévu de dupliquer certains des objets enregistrés sur la carte à puce dans une mémoire à accès rapide du boîtier. L'espace logique 22 accueillant de tels objets est donc localisé dans la mémoire 8 du boîtier. L'adjonction de cet espace logique au précédent a pour avantage d'augmenter les performances de l'équipement en réduisant la durée des télé transactions. Un exemple d'utilisation de cet espace logique 22 peut être le suivant. Lors de l'introduction de la carte à puce dans le boîtier, certains objets contenus dans la carte à puce sont dupliqués dans l'espace logique 22 du boîtier. La liste de ces objets peut être obtenue par consultation d'un objet "répertoire" enregistré sur la carte à puce. Pour effectuer une lecture rapide, lors d'une transaction, d'objets enregistrés initialement sur la carte à puce et dupliqués dans l'espace logique 22 du boîtier, il suffit d'émettre depuis la station fixe, une directive de lecture adressant l'objet à lire dans l'espace logique 22. Pour accéder à la valeur originale d'un objet enregistré sur la carte à puce, il suffit d'émettre, depuis la station fixe, une directive de lecture adressant l'objet dans l'espace logique 21.

L'échange de cartes à puce avant l'établissement d'une transaction entre la station fixe et un équipement embarqué constitue la principale utilisation frauduleuse d'un tel équipement embarqué. Pour détecter une telle utilisation frauduleuse, il est prévu d'enregistrer dans un troisième espace mémoire logique 23, faisant partie de la mémoire 8 du boîtier, les objets modifiés au cours d'une transaction entre l'équipement embarqué et la station fixe, ces objets modifiés étant aussi présents dans l'espace mémoire logique 21 en vue de leur comparaison au moment d'une prochaine transaction avec ceux de l'espace mémoire logique 23. L'adjonction de cet espace mémoire logique 23 a pour avantage d'établir une association entre un porteur de boîtier (véhicule) et une carte à puce et constitue une solution au contrôle de l'utilisation frauduleuse d'un équipement embarqué.

Enfin un quatrième espace mémoire logique 24 faisant partie de la mémoire 8 du boîtier sert à l'enregistrement d'informations relatives à l'intégrité des objets dans les autres espaces logiques, ces informations pouvant correspondre au résultat d'une comparaison des objets présents simultanément dans les espaces logiques 21,22,23. L'adjonction de cet espace mémoire logique 24 permet de contrôler facilement l'intégrité des objets résidant dans les espaces mémoire logique 21,22,23.

Etant donné qu'un même objet peut être présent dans différents espaces mémoire logique, le programme de commande du boitier doit inclure des commandes de lecture d'un même objet dans différents espaces mémoire logique et d'enregistrement d'un même objet dans ces différents espaces mémoire logique.

## Revendications

1. Procédé pour structurer des objets de télé transactions dans un espace mémoire physique (20) d'un équipement embarqué comportant un boîtier électronique (11) comprenant une unité de contrôle et de traitement de données à laquelle est reliée une première mémoire (8) réservée pour l'enregistrement de tels objets, un lecteur (9) de carte à puce à microcalculateur destiné à enregistrer de tels objets dans une seconde mémoire (12) prévue sur la carte à puce (2), et des moyens d'émission réception vers un poste fixe (3), caractérisé en ce qu'on prévoit de partitionner l'espace mémoire physique (20) défini par la première (8) et la seconde (12) mémoire en plusieurs espaces mémoire logique (21,22,23,24), chaque objet de télé transactions à enregistrer dans l'espace mémoire physique (20) étant identifié par une adresse logique comportant un premier champ (IdE) indicatif de l'espace mémoire logique de localisation d'un tel objet et un second champ (IdO) indicatif d'un numéro logique d'objet.

2. Procédé selon la revendication 1, dans lequel l'espace mémoire physique est partitionné en quatre espaces mémoire logique dont l'un (21) correspond à l'espace mémoire défini par la seconde mémoire.

3. Procédé selon l'une des revendications 1 ou 2, caractérisé en ce que lors de l'introduction de la carte à puce (2) dans ledit lecteur (9), au moins certains objets contenus dans ladite seconde mémoire (12) sont dupliqués dans un espace mémoire logique (22) de ladite première mémoire (8).

## Patentansprüche

1. Verfahren zum Strukturieren von Objekten von Teletransaktionen in einem physikalischen Speicherraum (20) eines mitgeführten Gerätes, das ein elektronisches Gehäuse (11), das eine Steuer- und Datenverarbeitungseinheit umfaßt, an die ein erster Speicher (8), der für die Aufzeichnung solcher Objekte reserviert ist, angeschlossen ist, einen Leser (9) für Mikrorechner-Chipkarten, der zum Aufzeichnen solcher Objekte in einem auf der Chipkarte (2) vorgesehenen zweiten Speicher (12) bestimmt ist, und Mittel zum Senden und Empfangen zu einem festen Posten (3) aufweist, dadurch gekennzeichnet, daß vorgesehen ist, den durch den ersten (8) und den zweiten Speicher (12) definierten physikalischen Speicherraum (20) in mehrere logische Speicherräume (21, 22, 23, 24) zu partitionieren, wobei jedes in dem physikalischen Speicherraum (20) aufzuzeichnende Objekt von Teletransaktionen durch eine logische Adresse identifiziert ist, die ein erstes, den logischen Speicherraum der Lokalisierung eines solchen Objekts angebendes Feld (IdE) und ein zweites, eine logische Nummer des Objekts angebendes Feld (IdO) umfaßt.

2. Verfahren nach Anspruch 1, bei dem der physikalische Speicherraum in vier logische Speicherräume partitioniert ist, von denen einer (21) dem durch den zweiten Speicher definierten Speicherraum entspricht.

3. Verfahren nach einem der Ansprüche 1 oder 2, dadurch gekennzeichnet, daß bei der Einführung der Chipkarte (2) in das Lesegerät (9) wenigstens bestimmte im zweiten Speicher (12) enthaltene Objekte in einen logischen Speicherraum (22) des ersten Speichers (8) dupliziert werden.

## Claims

1. A method of structuring remote transaction objects in a physical memory space (20) of on-board equipment comprising an electronics unit (11) including a control and data processing unit to which is connected a first memory zone (8) for recording such objects, a microprocessor smart card reader (9) intended for recording such objects in a second memory (12) provided on the smart card, and means for transmitting to/receiving from a fixed station (3), the method being characterized in that the physical memory space (20) defined by the first (8) and second (12) memories is partitioned into a plurality of logical memory spaces (21, 22, 23, 24), each remote transaction object to be recorded in the physical memory space (20) being identified by a logical address comprising a first field (IdE) indicative of the logical memory space in which such an object is located and a second field (Id0) indicative of a logical object number.

2. A method according to claim 1, in which the physical memory space is partitioned into four logical memory spaces, one of which (21) corresponds to the memory space defined by the second memory.

3. A method according to claim 1 or claim 2, characterized in that when the smart card (2) is inserted in said reader (9), at least some of the objects contained in said second memory (12) are duplicated in a logical memory space (22) of said first memory (8).
